**Europäisches Patentamt**

**European Patent Office**

**Office européen des brevets**

(19)

(11) Veröffentlichungsnummer : **0 391 206 B1**

(12) **EUROPÄISCHE PATENTSCHRIFT**

(45) Veröffentlichungstag der Patentschrift :
03.05.95 Patentblatt 95/18

(51) Int. Cl.⁶ : **G05D 1/02**

(21) Anmeldenummer : **90105757.0**

(22) Anmeldetag : **27.03.90**

(54) **Navigationssystem und- Verfahren zur leitdrahtlosen Führung von fahrerlosen Flurförderzeugen.**

(30) Priorität : **05.04.89 DE 3911054**

(43) Veröffentlichungstag der Anmeldung :
**10.10.90 Patentblatt 90/41**

(45) Bekanntmachung des Hinweises auf die
Patenterteilung :
**03.05.95 Patentblatt 95/18**

(84) Benannte Vertragsstaaten :
**AT BE CH DE ES FR GB IT LI LU NL SE**

(56) Entgegenhaltungen :
**EP-A- 0 193 985**
**EP-A- 0 252 219**
**EP-A- 0 270 415**
**DE-A- 3 001 146**
**DE-A- 3 110 499**
**DE-A- 3 606 418**
**GB-A- 2 143 969**
**WO-88/07711**

(73) Patentinhaber : **Wagner Fördertechnik GmbH
& Co KG
St.-Peter-Strasse 5
D-72760 Reutlingen (DE)**

(72) Erfinder : **Schwager, Jürgen, Dr.-Ing.
Gerh.-Hauptmann-Strasse 29
D-7417 Pfullingen (DE)**
Erfinder : **Sommer, Gerhard, Dipl.-Ing.
Wielandstrasse 5
D-7441 Kohlberg (DE)**
Erfinder : **Dongus, Michael, Dipl.-Ing.
Schulstrasse 19/3
D-7031 Jettingen (DE)**

(74) Vertreter : **Kasseckert, Rainer
Linde AG
Zentrale Patentabteilung
Dr.-Carl-von-Linde-Strasse 6-14
D-82049 Höllriegelskreuth (DE)**

## Beschreibung

Die Erfindung betrifft ein Navigationssystem zur leitdrahtlosen Führung von fahrerlosen Flurförderzeugen nach dem Oberbegriff des Anspruchs 1.

Es ist seit vielen Jahren bekannt, die Fahrspuren für fahrerlose Flurförderzeuge durch stromdurchflossene Drähte in der Fahrbahnoberfläche zu markieren und diese zur Spurfindung mittels fahrzeuginterner Sensoren bzw. Spulen induktiv abzutasten. Dieser als "induktive Führung" bezeichneten Technik hängt insbesondere der Nachteil an, daß eine Erstellung der Fahrstrecken aufwendige mechanische und elektrische Bodenarbeiten, wie z. B. fräsen von Nuten, Einlegen von Drähten, Vergießen und Verschleifen der Nuten usw. voraussetzt, um die induktiven Spurschleifen n der Fahrbahnoberfläche zu verlegen. Die dabei auftretende, oft unerwünschte Beschädigung neuer Hallenböden ganz außer acht lassend, ist der dazu erforderliche Zeit- und Kostenaufwand in vielen Fällen nicht vertretbar.

Eine andere, als Koppelnavigation bekannte Technik zur Führung fahrerloser Flurförderzeuge auf vorgegebenen Führungsbahnen besteht darin, daß sich die Bahnen aus einer Vielzahl kurzer, gerader Streckenelemente zusammensetzen, die aneinandergereiht einen Polygonzug darstellen. Dabei wird die Lenkung derart beeinflußt, daß jedes Streckenelement mit einem bestimmten Lenkwinkel des Flurförderzeuges durchfahren wird. Durch mathematische bzw. trigonometrische Verknüpfung des zurückgelegten Weges s mit den jeweiligen Lenkwinkelwerten $\alpha$ läßt sich die Veränderung der Lage des Flurförderzeuges im Raum berechnen. Als wesentlicher Nachteil dieses Führungsprinzips hat sich in der Praxis herauskristallisiert, daß die Berechnung der Lage des Flurförderzeuges im Raum - ausgehend von einem Ausgangspunkt nach der Koppelnavigation - mit einer über der gesamten Fahrstrecke zunehmenden Ungenauigkeit behaftet ist, die durch eine Vielzahl unberücksichtigter Parameter, wie z. B. Bodenunebenheiten, Fahrzeugtoleranzen, Meßungenauigkeit von Winkel und Weg usw. verursacht wird. Da die genaue Erfassung sämtlicher fehlerverursachender Parameter in der Regel am dazu erforderlichen Kosten- und Mittelaufwand scheitert, lassen sich freie Fahrstrecken ohne Führungsmedium nach diesem Koppelnavigationsprinzip nur auf kurzen Längen von 5 bis maximal 10 Metern realisieren.

Daraus basiert die Erfahrung, daß eine Navigation entlang längerer Strecken eine meßtechnische Erfassung der Umweltbedingungen erfordert. In Berücksichtigung dieser Zusammenhänge wurden deshalb bereits auf Ultraschall- bzw. Laserstrahlbasis arbeitende Abstandssensoren zur Abtastung von Raumwänden bzw. räumlichen Abstandsmarkierungen oder optische Sensoren, beispielsweise Laserscanner, zur Abtastung von Führungsstrahlen oder räumlich angeordneten Barcodes vorgeschlagen. Diese Verfahren setzen voraus, daß die jweiligen Meßstrecken zwischen dem Flurförderzeug und den Raumwänden bzw. den räumlichen Markierungen stets frei sein müssen und nicht durch Personen, andere Fahrzeuge, Gegenstände oder Waren gestört und somit unterbrochen sein dürfen. Die in Fabrikations- bzw. Warenumschlagsanlagen gegebenen Verhältnisse lassen deshalb dieses Verfahren in den wenigsten Fällen zu.

Die Erkenntnis daraus, daß dieser Nachteil bei der Abtastung von Bodenmarkierungen vermieden werden kann, wird bereits in der europäischen Patentanmeldung 0 193 985 berücksichtigt. In dieser wird vorgeschlagen, den als Fahrbahnoberfläche dienenden Fußboden im Bereich des Fahrweges mit einem geometrischen Flächenraster (grid) von Markierungselementen zu versehen, die beim Überfahren mittels einer in der Fahrzeugfront angebrachten Sensorik abgetastet und die derart ermittelten Werte zur Lenkkorrektur und Führung des Flurförderzeuges trigonometrisch verknüpft werden. Der relativ geringe Rasterabstand der Markierungselemente untereinander, der in etwa der Fahrzeugbreite entspricht, sichert eine Unabhängigkeit der zu fahrenden Bahn von dem geometrischen Markierungsraster, wodurch die Bahn beliebig vorwählbar verlaufen kann. Die bodenstationäre Installation der Markierungspunkte des geometrischen Flächenrasters, deren Anzahl - abhängig von den vorhandenen Platzverhältnissen und der Fahrkurslänge - in die Hunderte gehen kann - bedeutet jedoch ein absolutes Höchstmaß bezüglich des Aufwandes an Mitteln und Kosten, das nur in den Einzelfällen vertretbar ist, bei denen fortlaufend variierende Fahrkurse erforderlich sind. Dies stellt jedoch zweifelsohne die Ausnahme dar, da in der Regel auf festen Fahrkursen zwischen bestehenden Fabrikations- bzw. Maschinenanlagen verfahren werden muß. Abgesehen davon erfordert die Bodenverlegung der Markierungselemente durch das genau einzuhaltende geometrische Flächenmuster mit absolut gleichen Abständen Rasterpunkte untereinander und mit absolut rechtwinkliger Anordnung der durch die einzelnen Rasterpunkte in der Fläche gebildeten senkrechten und horizontalen Linien äußerste Präzision und Sorgfaltspflicht des Installationspersonals, was sich letztendlich in immensen Kosten niederschlägt.

Aus der GB-2 143 969 A ist eine Fahrzeugführung bekannt, bei der im Boden längs der Sollbahn Markierungen angeordnet sind, die vom Fahrzeug überfahren werden und von fahrzeugfesten Detektoren registriert werden. Die Markierungen haben die Form von "bar-codes" und geben dem Fahrzeug Informationen über die weitere Fahrtrichtung und über eventuelle Geschwindigkeitswechsel. Nachteilig ist - neben der verschmutzungsempfindlichen optischen Abtastung - die mangelnde Flexibilität des Systems. Ein neuer Fahrkurs erfordert Änderungen der Marken - also der Bodeninstallation.

Aus der WO 88/07711 ist ein Steuerverfahren für ein selbstfahrendes Fahrzeug bekannt, bei dem sich das Fahrzeug an neben der Fahrbahn stehenden Umgebungsobjekten - insbesondere an Kanten, Vorsprüngen und Wänden - mittels Abstandsmessungen orientiert. Veränderungen der Fahrumgebung, also das Entfernen, das Verrücken oder das Zustellen von bisher genutzten Flächen erfordert eine Neuprogrammierung.

Aus der EP 252 219 ist ein Navigationssystem bekannt, bei dem im Boden installierte Marken vorgesehen sind, die über eine fahrzeuginterne Sensorik mit einer fahrzeuginternen Bahnführungseinrichtung zur Kurskorrektur der Flurförderzeuge in Wirkverbindung stehen. Dabei sind die Marken entlang des Bereiches der Sollbahn abstandsweise in linearer Formationskette angeordnet. Über die Abstände der Marken ist keine Aussage gemacht. Die Marken bestehen aus einer Mehrzahl von Linien; die Längsabmessungen der Marken sind in der Größenordnung des Radstandes des Fahrzeugs. Deren Querabmessungen sind größer als die Breite des Fahrzeugs. Daher ist das Aufbringen der Marken relativ arbeitsintensiv. Die Orientierung auf den Marken erfolgt mittels eines Rechners, der aus der Zeit, die das - mit konstanter Geschwindigkeit fahrende - Fahrzeug zwischen dem Überqueren zweier Linien braucht, die Abstände von der Sollbahn berechnet. Muß das Fahrzeug beim Überfahren der Marke stoppen oder abbremsen, ist die Aufdatung auf dieser Marke nicht möglich.

Davon ausgehend ist es Aufgabe der Erfindung, ein solches Navigationssystem dahingehend zu verbessern, daß der Aufwand beim Setzen der Marken drastisch verringert wird und daß die Orientierung auf den Marken geschwindigkeitsunabhängig möglich ist.

Gemäß der Erfindung wird die obige Aufgabe mit Hilfe eines Navigationssystems gelöst, welches durch die Merkmale des Patentanspruchs 1 gekennzeichnet ist.

Durch die erfindungsgemäße Gestaltung ergeben sich folgende Vorteile gegenüber dem Stand der Technik:

- keine optische Abtastung des Fußbodens, wodurch eine Unempfindlichkeit gegen Verschmutzung oder mechanische Belastung des Fußbodens erzielt wird;
- keine Abtastung der Wände, wodurch eine Anwendbarkeit auch dort gegeben ist, wo Wände fehlen (Außeneinsatz) oder durch Hindernisse, z. B. andere Fahrzeuge, nicht abtastbar sind;
- keine rotierenden Feinmechanik-Teile im Bahnsensor, wodurch sind eine besondere Anwendbarkeit unter rauhesten Einsatzbedingungen ergibt;
- keine optischen Sensoren, weshalb der Einsatzbereich auch in staubiger und schmutziger Umgebungsatmosphäre erfolgen kann;
- nur wenige Navigations-Stützpunkte im Boden und ein Navigationsmodul im Flurförderzeug stellen kaum zu unterbietende preisgünstige Komponenten dar.

Weitere vorteilhafte Ausgestaltungen und Weiterbildungen des Erfindungsgedankens ergeben sich aus den Unteransprüchen und der Beschreibung.

Die Erfindung läßt zahlreiche Ausführungsformen zu. Eine davon ist zur Verdeutlichung ihres Grundprinzips schematisch in den Figuren dargestellt und nachfolgend beschrieben. Es zeigt:

Fig. 1 eine schematische Prinzipskizze eines Flurförderzeuges mit erfindungsgemäßer Zuordnung von fahrzeuginterner Sensorik zu einem Navigations-Stützpunkt,

Fig. 2 eine schematische Darstellung eines fahrzeuginternen Ultraschall-Abstandssensors

Fig. 3 ein Blockschaltbild der Steuerung eines Flurförderzeuges gemäß Fig. 1,

Fig. 4 eine Definition der vom Anwender vorzugebenen Parameter einer Fahrkurs-Geometrie,

Fig. 5 eine schematische Darstellung des Bodenaufbaus einer Fahrstrecke mit einer Sollbahn (Bezugsbahn) und einer Korrekturbahn mit schematischer Andeutung eines zu verfahrenden Flurförderzeuges mit Dreirad-Konfiguration,

Fig. 6 eine Prinzipskizze eines auf der Korrekturbahn verfahrenden Flurförderzeuges gemäß Fig. 1 mit Winkelabweichung zwischen einer Istbahn und einer Sollbahn und

Fig. 7 eine Prinzipskizze einer Ausgleichsbewegung eines Flurförderzeuges gemäß Fig. 1 zwischen zwei Navigations-Stützpunkten auf einer Istkurve zur Kurskorrektur mit Darstellung eines ortsfesten Raumkoordinatensystems und eines versetzten Raumkoordinantensystems.

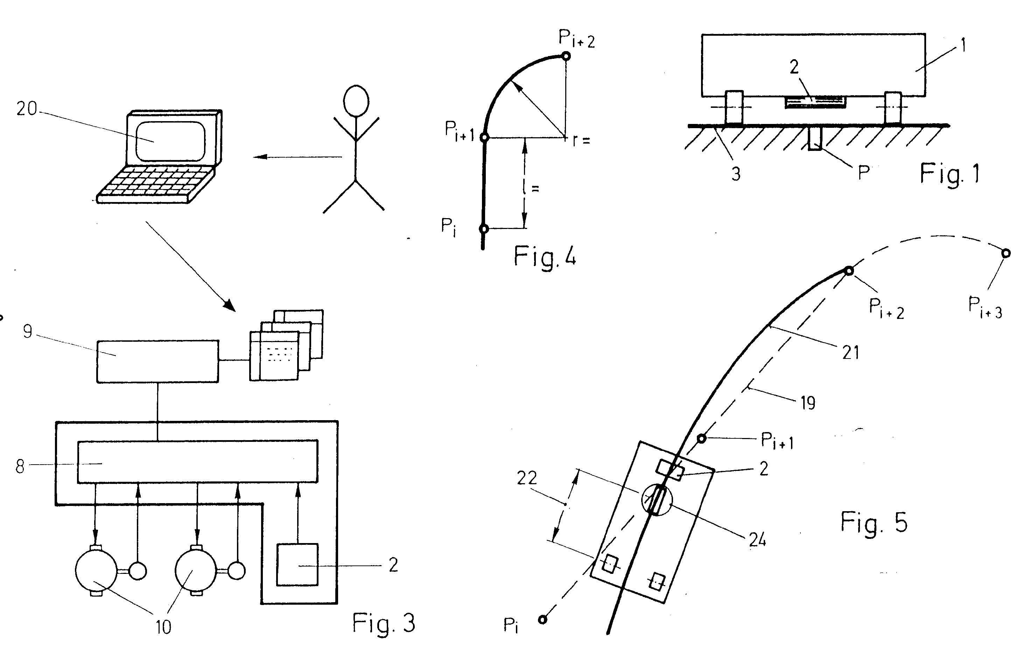

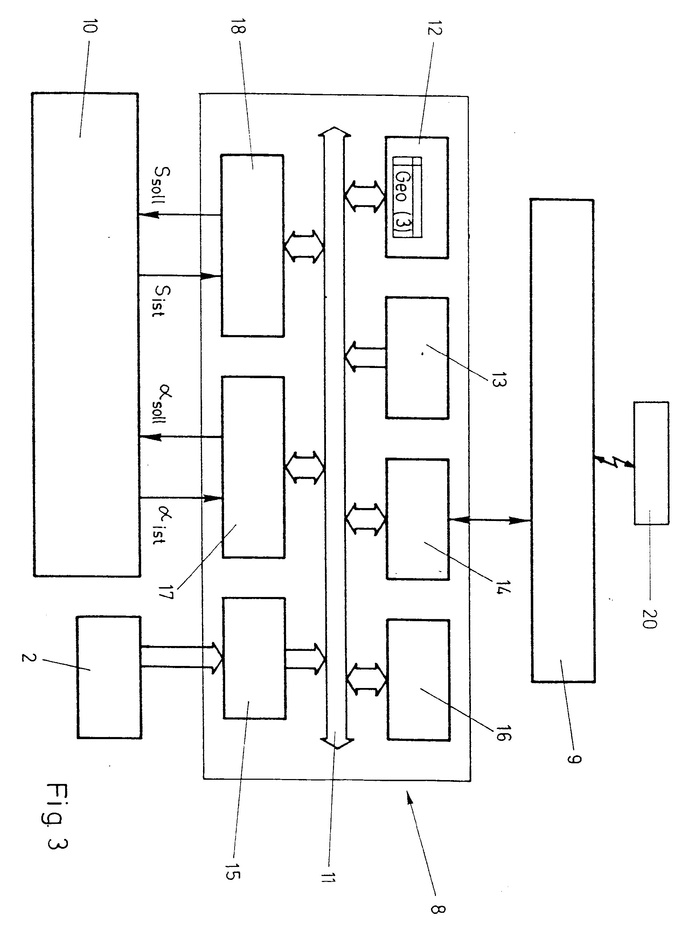

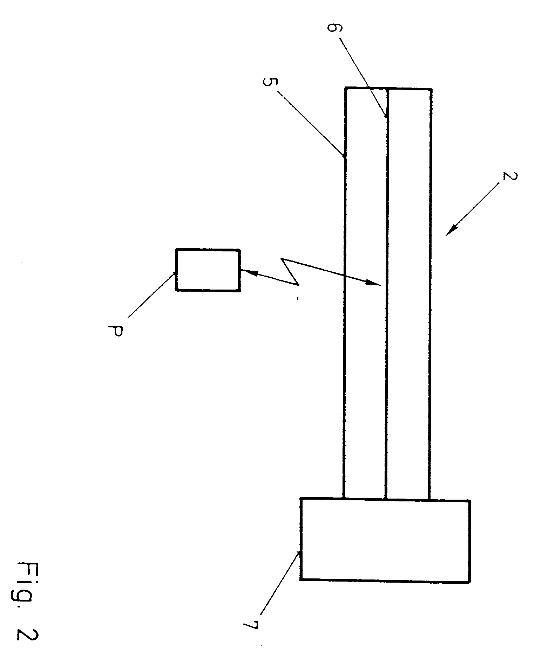

Ein in Fig. 1 schematisch veranschaulichtes Flurförderzeug 1 ist in bekannter und deshalb nicht näher dargestellter und beschriebener Weise in einer der, bei fahrerlosen Flurförder zeugen bekannten Varianten mit zumindest einem Lenkmotor und zumindest einem Fahrmotor ausgestattet. Die Anzahl der zur Anwendung kommenden Lenkmotoren bzw. Fahrmotoren richtet sich dabei nach Fahrwerkskonfiguration und Radanordnung(en). Das Flurförderzeug 1 ist unterseitig - vorzugsweise im Frontbereich - mit einer abstandserfassenden Sensorik 2 ausgestattet.

Wie in Fig. 1 angedeutet, sind der Sensorik 2 in die Fahrbahn 3 eingelassene Navigations-Stützpunkte P meßtechnisch zugeordnet. Diese sind - eine lineare Formationskette bildend - abstandsweise in die Fahrbahn versenkt, dergestalt, daß deren Oberfläche mit der Fahrbahnoberfläche bündig abschließt oder geringfügig darunter liegt. Als Navigations-Stützpunkte P können Permanentmagneten - vorzugsweise in einer Größe bis zu einem Durchmesser von 1 cm - sowie aktive und/oder passive Datenträger eines Identifikationssystems (auch Plaketten, Transponder oder Codeträger genannt) zur Anwendung kommen. Die Navigations-Stützpunkte P bestehen aus induktiv abtastbaren Materialien.

Die in Fig. 2 dargestellte Sensorik ist im Ausführungsbeispiel vorzugsweise als auf magnetostriktiver Basis arbeitender Ultraschall-Abstandssensor 2 ausgebildet. Dieser arbeitet unter Ausnutzung des magnetostriktiven Effektes, der über eine Ultraschall-Laufzeitmessung zur Positionsbestimmung wie nachfolgend beschrieben ausgewertet wird.

Der Ultraschall-Abstandssensor 2 besteht aus einem quer zur Fahrzeuglängsachse 4 eingebauten Stab 5, in dem sich ein gespannter Draht 6 befindet. Auf diesen Draht 6 wird von einem, in einer schematisch angedeuteten Sensor-Steuerung 7 angeordneten Impulserzeuger ein Stromimpuls ausgesandt. Beim Überfahren eines Navigations-Stützpunktes P, der beispielsweise als Permanentmagnet ausgebildet ist, tritt ein magnetostriktiver Effekt an der Stelle des Drahtes 6 auf, die sich über dem Navigations-Stützpunkt P befindet. Daraus resultiert ein Ultraschall-Impuls, der sich zu den Drahtenden hin fortpflanzt. Die Laufzeit dieses Ultraschall-Impulses wird von einer in der Sensor-Steuerung 7 beinhalteten Auswerteelektronik gemessen und stellt ein Maß für den seitlichen Abstanddzwischen der Fahrzeuglängsachse 4 und dem Mittelpunkt des Navigations-Stützpunktes P dar. Somit läßt sich auf einfache Weise genau ermitteln, mit welchem seitlichen Versatz der jeweilige Navigations-Stützpunkt P vom Flurförderzeug 1 überquert wird.

Obwohl der physikalische Meßeffekt eines derartigen Sensors im Prinzip bekannt ist, stellt die Erkenntnis, diesen überraschenderweise zur freien Navigation eines Flurförderzeuges zu nutzen, ein absolutes Novum dar. Selbstverständlich liegt es im Rahmen der Erfindung, auch andere abstandserfassende Sensoren, wie z. B. Lineararrays usw., mit der Breite der größten zu erfassenden Seitentoleranz zur Abstandsmessung einzusetzen. Diese sind jedoch im Gegensatz zum Ultraschall-Abstandssensor 2 sehr teuer und bedingen aufwendigere Meßschaltungen.

Gemäß dem Blockschaltbild der Fig. 3 besteht die Steuerung des Flurförderzeuges 1 im wesentlichen aus einem Bahnführungsrechner 8, einem Bordrechner 9 sowie den bereits zuvor erwähnten, mit der Bezugsziffer 10 nur schematisch angedeuteten Lenkmotoren und Fahrmotoren mit deren Leistungsendstufen. Der Bahnführungsrechner 8 ist mit einem Mikroprozessor-Bus 11 ausgestattet, an welchen ein Datenspeicher 12, ein Programmspeicher 13, zumindest eine serielle Schnittstelle 14 und eine parallele Schnittstelle 15, ein Mikroprozessor 16, zumindest ein Winkelregler 17 und ein Geschwindigkeitsregler 18 angeschlossen sind. Der Geschwindigkeitsregler 18 ist mit den Leistungsendstufen der Fahrmotoren 10 zur Übertragung von Meß- und Regelwerten $s_{ist}$

und $s_{soll}$ und der Winkelregler 17 mit den Leistungsendstufen der Lenkmotoren 10 zur Übertragung der Meß- und Regelwerte $\alpha_{ist}$ und $\alpha_{soll}$ datengekoppelt. Der Ultraschall-Abstandssensor 2 ist zur Übertragung seiner Meßwerte über die parallele Schnittstelle 15 und der Bordrechner 9 an der seriellen Schnittstelle 14 zwecks Eingabe und Quittierungen von Fahraufträgen über den Mikroprozessor-Bus 11 mit dem Mikroprozessor 16 verbunden.

Der Bordrechner 9 ist zwecks Vorgabe und Speicherung von Daten und/oder Koordinatenwerten der Navigations-Stützpunkte P und/oder zumindest einer Sollbezugsbahn 19 mit zumindest einem externen Rechner 20 zwecks drahtloser und/oder drahtgebundener Datenübertragung koppelbar. Dabei ist der externe Rechner 20 vorzugsweise als Laptop-PC mit CAD ausgebildet. Dadurch ist es möglich, daß der Anwender der Flurförderzeuge 1 die Fahrstrekke bzw. Erweiterungen und/oder Veränderungen derselben selbst generiert und im Datenspeicher 12 des Bahnführungsrechners 8 ablegt.

In Fig. 4 ist eine stark vereinfachte Fahrkurs-Geometrie mit einer Definition der vom Anwender vorzugebenden Parameter dargestellt. Dieser Fahrkurs besteht aus einem zwischen den Navigations-Stützpunkten $P_i$ und $P_{i+1}$ verlaufenden geraden Streckenabschnitt mit der Länge l und einem zwischen den beiden Navigations-Stützpunkten $P_{i+1}$ und $P_{i+2}$ verlaufenden, gekrümmten Streckenabschnitt, ausgebildet als Kurvenbahn mit dem Radius r.

Fig. 5 veranschaulicht schematisch den Bodenaufbau einer Fahrstrecke mit einer durch die Navigations-Stützpunkte $P_i$ - $P_{i+3}$ definierten Sollbezugsbahn 19 sowie einer vom Flurförderzeug 1 aufgrund dedektierter Abweichung von der Sollbezugsbahn 19 gefahrenen Korrekturbahn 21 zum Navigations-Stützpunkt $P_{i+2}$. Dabei ist besonders gut ersichtlich, daß die Navigations-Stützpunkte P im Bereich der geplanten Sollbezugsbahn 19 entlang derselben in linearer kettenförmiger Formation angeordnet sind. Die Abstände zwischen den einzelnen Navigations-Stütz punkten P können regelmäßig und/oder unregelmäßig gew#hlt und in bisher nicht dagewesener Weise relativ groß gehalten werden. Sie betragen in der Regel mehr als das 4- fache des Radstandes 22 des Flurförderzeuges 1 und bewegen sich in Bereichen zwischen 8 und 30 Metern.

Selbstverständlich kann die lineare Formationskette der Navigations-Stützpunkte P durch eine Vielzahl einzelner Streckenabschnitte gebildet werden, die als Geraden und/oder mathematisch bzw. geometrisch definierbare, beliebig gekrümmte Kurven, z. B. Ellipsensegmente, Parabelsegmente usw., ausgebildet sind.

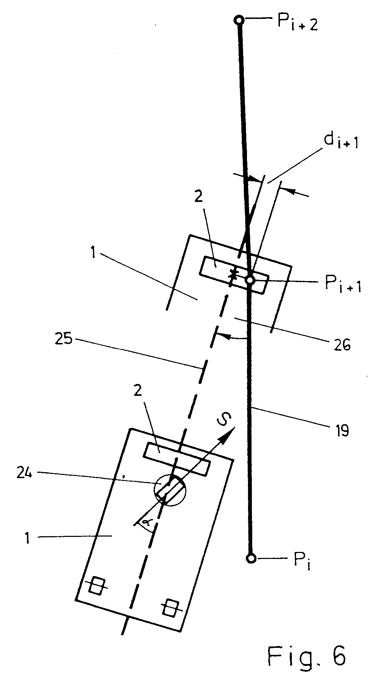

Die Prinzipskizze der Fig. 6 zeigt beispielhaft ein Flurförderzeug 1 mit Dreirad-Konfiguration und einem vorderen Lenkrad 24. Dieses verfährt auf einer Istbahn 25 mit der Winkelabweichung 26 zu der von den drei Navigations-Stützpunkten $P_i$ bis $P_{i+2}$ gebildeten Sollbezugsbahn 19 in Richtung auf den zweiten Navigations-Stützpunkt $P_{i+1}$ , den es mit einem seitlichen Abstand $d_{i+1}$ zwischen der Fahrzeuglängsachse 4 und dem Navigations-Stützpunkt $P_{i+1}$ überquert. Durch eine von der Richtung der Istbahn 25 abweichende Stellung des gelenkten Rades 24 ist beispielhaft der Lenkwinkel $\alpha$ angedeutet. Selbstverständlich muß die Stellung des Lenkrades 24 in Richtung der befahrenen, strichpunktiert gekennzeichneten Istbahn 25 liegen.

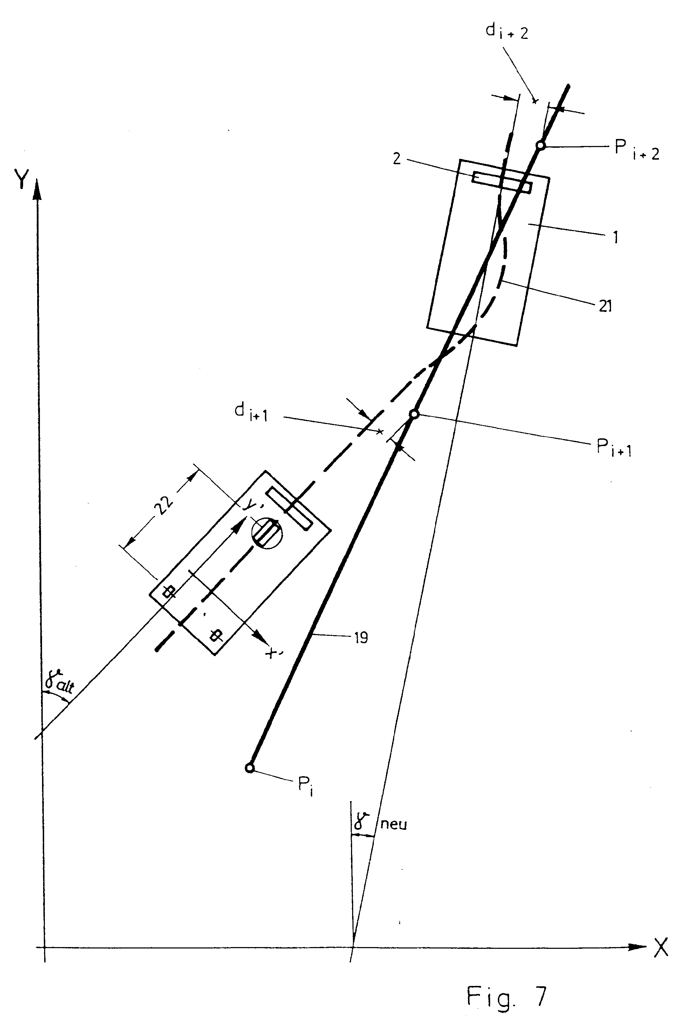

Fig. 7 verdeutlicht das Prinzip einer Ausgleichsbewegung eines Flurförderzeuges 1 zwischen den Navigations-Stützpunkten $P_{i+1}$ und $P_{i+2}$ , wobei beim Überfahren des zweiten Navigations-Stützpunktes $P_{i+1}$ ein seitlicher Abstand von $d_{i+1}$ und beim Überfahren des dritten Navigations-Elementes $P_{i+2}$ ein seitlicher Abstand von $d_{i+2}$ gemessen wird. Ausgehend vom Nullpunkt des räumlichen Koordinatensystems x, y wird dabei der Navigations-Stützpunkt $P_{i+1}$ mit einer Fahrzeugwinkellage $\gamma_{alt}$ im Raum überfahren und anhand des dabei aufgenommenen neuen Abstands-Meßwertes $d_{i+1}$ eine neue Korrekturbahn 21 generiert. Das Flurförderzeug 1 führt auf dieser Korrekturbahn 21 eine Ausgleichsbewegung durch, wobei die gefahrene Korrekturbahn 21 möglichst genau den nächstfolgenden Navigations-Stützpunkt $P_{i+2}$ treffen soll. Während dieser Fahrt treten jedoch wiederum aufgrund von Störeinflüssen bedingte, nicht meßbare Abweichungen auf, die im Navigations-Stützpunkt $P_{i+2}$ abermals zu einer seitlichen Abweichung $d_{i+2}$ führen.

Die Wirkungsweise des erfindungsgemäßen Navigationssystems ist nachfolgend näher erläutert.

Über ein CAD-System des externen Rechners 20 werden die Sollbahnkurven 19 für die fahrerlosen Flurförderzeuge 1 erzeugt, die im Datenspeicher 13 des Bahnführungsrechners 8 als Geometriedatensatz in Raumkoordinaten abgelegt werden und die Sollwerte für die Fahrzeugregelung bilden. Der Geometriedatensatz enthält außerdem die Koordinaten der Navigations-Stützpunkte P.

Diese Bahn-Sollwerte werden nicht unmittelbar in die fahrzeugbezogenen Sollwerte $S_{soll}$ und $\alpha_{soll}$ , sondern vorher in Korrekturbahnen 21 umgewandelt. Die Korrekturbahnen 21 werden aufgrund der Abweichungen $d_i$ an einem Stützpunkt $P_i$ gebildet, daß die Korrekturbahn 21 den Navigations-Stützpunkt $P_{i+1}$ genau trifft. Aus den Korrekturbahnen 21 werden im Bahnführungsrechner 8 des Flurförderzeugs 1 die Achs-Sollwerte $S_{soll}$ u.$\alpha_{soll}$ des Flurförderzeuges 1 berechnet und an die unterlagerten Elemente, d. h. Lenkmotoren und/oder Fahrmotoren 10, ausgegeben und ausgeregelt.

Auf der Fahrt von $P_i$ nach $P_{i+1}$ erfolgt zusätzlich zur Achsregelung eine Rückführung im Raum-Regelkreis über eine Umrechnung der Istwerte $S_{ist}$ und $\alpha_{ist}$ in Raumkoordinaten x, y, $\gamma$ und eine Ausregelung der Lenkmotoren und/oder Fahrmotoren 10 in Raumkoordinaten. Beim nächsten Stützpunktelement $P_{i+1}$ tritt infolge von unvermeidbaren Bahnabweichungen eine seitliche Abweichung $d_{i+1}$ auf, auf die dann wiederum sinngemäß die zuvor erwähnten Verfahrensschritte anzuwenden sind. Als Sicherheitsfunktion wird für jeden Navigations-Stützpunkt P eine Strecke $s_{max.}$ vorgegeben, nach der ein Notstop des Flurförderzeuges 1 ausgelöst wird, wenn der Navigations-Stützpunkt P nicht detektiert wird.

Zur Bestimmung der Korrekturbahnen 21 ist die Kenntnis des jeweils aktuellen Raumwinkels $\gamma$ erforderlich, der sich folgendermaßen ermitteln läßt.

Bezüglich dem raumfesten Koordinatensystem x, y wird beim Überfahren eines Navigations-Stützpunktes $P_i$ ein Fahrzeug-Koordinatensystem x′, y′ gebildet, das gegenüber x, y um den Winkel $\gamma_{alt}$ gedreht ist. Wie bereits zuvor erläutert, wird der Abstand $d_i$ mittels des Abstandssensors 2 gemessen.

Während der Fahrt von $P_i$ nach $P_{i+1}$ werden die Komponenten des Fahrweges s in x′-Richtung und in y′-Richtung gebildet. Sie werden $\Delta x′$ und $\Delta y′$ genannt. Diese Werte werden gebildet, indem man eine auf die Kinematik des Fahrzeug zugeschnittene Koordinatentransformation

$$x′ = f(s,\alpha)$$
$$y′ = f(s,\alpha)$$
$$\gamma′ = f(s,\alpha)$$

durchführt, wobei der Weg s und der Lenkwinkel $\alpha$ im Fahrzeug meßbar sind. Dabei kommen für ein 3-Rad-Fahrzeug mit einem im Mittelpunkt des Lenkrades 24 geführten Punkt folgende Gleichungen zur Anwendung:

$$x′ = x_0′ - \int_0^t \dot{s} \cdot \sin(\gamma+\alpha)\, dt$$

$$y′ = y_0′ + \int_0^t \dot{s} \cdot \cos(\gamma+\alpha)\, dt$$

$$\gamma′ = \gamma_0′ + \int_0^t \frac{1}{\ell} \cdot \dot{s} \cdot \sin\alpha\, dt$$

Bei Überfahren des Punktes $P_{i+1}$ wird erneut der Abstand $d_{i+1}$ mittels des Abstands-Sensors 2 gemessen. Aus diesen Größen läßt sich sowohl $\gamma_{neu}$ als auch $\gamma_{alt}$ folgendermaßen bestimmen:

$$\gamma_{neu} = f(d_1, d_2, \Delta x′, \Delta y′, \Delta\gamma′)$$
$$\gamma_{alt} = f(d_1, d_2, \Delta x′, \Delta y′, \Delta\gamma′)$$

Nach dem beschriebenen Verfahren ist es möglich, die Lage des Flurförderzeuges 1 im Raumkoordinatensystem, d. h. die aktuellen Werte für x, y und γ im Bahnführungsrechner 8 aus Messung von Fahrweg s, Lenkwinkel α und Abstandswerten d des Abstandssensors 2 zu berechnen.

Ein ganz besonderer Effekt des erfindungsgemäßen Navigations systems und -Verfahrens besteht darin, daß der Anwender durch die Wahl beliebiger gerader und/oder ungerader und beliebig weiter Abstände vollkommen frei ist in der bodenversenkten Anornung der Navigationsstutzpunkte. Er kann diese somit unter Berücksichtigung sämtlicher vor Ort gegebener Maschinenstandplätze und Fahrbahnverhältnisse, wie z.B. Fahrbahnmarkierungen, Abdeckungen von Leitungen und Spankanälen bzw. Spanförderern, Gullys u.s.w., installieren, ohne an ein bestimmtes Verlegungsmuster mit fest vorgegeben Abständen gebunden zu sein.

**Patentansprüche**

1.  Navigationssystem zur leitdrahtlosen Führung von fahrerlosen Flurförderzeugen (1) mit beliebiger Radkonfiguration zum freien Bahn- und Kurvenfahren entlang einer, zumindest einen geraden und/oder gekrümmten Abschnitt aufweisenden Sollbahn (19), wobei bodeninstallierte, von den Flurförderzeugen (1) überfahrbare Marken vorgesehen sind, deren Lagen in einem Bordrechner (9) eingespeichert sind und die über eine fahrzeuginterne Sensorik (2) mit einer fahrzeuginternen Bahnführungseinrichtung (8) zur Kurskorrektur der Flurförderzeuge (1) in Wirkverbindung stehen, wobei die Marken entlang des Bereiches der Sollbahn (19) abstandsweise in linearer Formationskette angeordnet sind und wobei die Abstände zwischen den Marken regelmäßig und/oder unregelmäßig sein können, **dadurch gekennzeichnet**, daß die Marken als punktförmige, induktiv abtastbare Navigationsstützpunkte (P) ausgebildet sind, deren Längsabmessungen und Querabmessungen erheblich kleiner sind als die Fahrzeugbreite, daß die Abstände der Navigationsstützpunkte (P) mehr als das Vierfache des Fahrzeugradstandes (22) betragen und daß die Sensorik (2) den Abstand (d) zwischen der Längsachse (4) des Flurförderzeuges (1) und dem jeweiligen Navigationsstützpunkt (P) mißt.

2.  Navigationssystem nach Anspruch 1, **dadurch gekennzeichnet**, daß die fahrzeuginterne Sensorik (2) als auf magnetostriktiver Basis arbeitender Ultraschall-Bahnsensor ausgebildet ist.

3.  Navigationssystem nach Anspruch 1 oder 2, **dadurch gekennzeichnet**, daß der Abstand der Navigations-Stützpunkte (P) minimal 8 m und maximal 30 m beträgt.

4.  Navigationssystem nach einem oder mehreren der vorangehenden Ansprüche, **dadurch gekennzeichnet**, daß die Navigations-Stützpunkte (P) als Permanentmagneten ausgebildet sind.

5.  Navigationssystem nach Anspruch 4, **dadurch gekennzeichnet**, daß die Navigations-Stützpunkte (P) zylindrisch ausgebildet sind und ihr Durchmesser maximal 1 cm beträgt.

6.  Navigationssystem nach einem oder mehreren der vorangehenden Ansprüche, **dadurch gekennzeichnet**, daß die Navigations-Stützpunkte (P) als aktive und/oder passive Datenträger eines Identifikationssystems ausgebildet sind.

7.  Navigationssystem nach einem oder mehreren der vorangehenden Ansprüche, **dadurch gekennzeichnet**, daß die Navigations-Stützpunkte (P) die Fahrbahnoberfläche nicht überragend im Boden (3) versenkt sind.

8.  Navigationssystem nach einem oder mehreren der vorangehenden Ansprüche, **dadurch gekennzeichnet**, daß in den Bahnführungsrechner (8) Daten bzw. Koordinatenwerte der Sollbezugsbahn (19) und/oder der Navigations-Stützpunkte (P) mittels drahtloser und/oder drahtgebundener Datenkopplung über zumindest einen externen Rechner (20) eingebbar sind.

9.  Navigationssystem nach einem oder mehreren der vorangehenden Ansprüche, **dadurch gekennzeichnet**, daß jedem Navigations-Stützpunkt (P) eine Sicherheitsstrecke $S_{max.}$ zur Detektion durch die abstandserfassende Sensorik (2) oder zur Auslösung eines Notstops des Flurförderzeugs (1) zugeordnet ist.

**Claims**

1.  Navigation system for control wire-less guidance of driverless industrial trucks (1) with any wheel configuration for free travel along paths and curves along a set path (19) exhibiting at least one straight and/or curved section, in which markers are provided installed in the ground over which the industrial trucks (1) can travel and the positions of which are stored in an on-board computer (9) and which are in operative connection with a path guiding device (8) inside the vehicle for correcting the course of the industrial trucks (1) by means of a sensor system (2) inside the vehicle, in which the markers are disposed along the set path (19) at intervals in a linear chain formation and in which the intervals between the markers can be regular and/or irregular, characterised in that the markers are embodied as punctiform, inductively scannable navigation support points (P) the linear dimensions and transverse dimensions of which are significantly smaller than the width of the vehicle, in that the intervals between the navigation support points (P) are more than four times the vehicle wheelbase (22) and in that the sensor system (2) measures the distance (d) between the longitudinal axis (4) of the industrial truck (1) and the particular navigation support point (P).

2. Navigation system according to claim 1, characterised in that the sensor system (2) inside the vehicle is embodied as an ultrasonic path sensor working on a magnetostrictive basis.

3. Navigation system according to claim 1 or 2, characterised in that the interval between the navigation support points (P) is a minimum of 8 m and a maximum of 30 m.

4. Navigation system according to one or more of the preceding claims, characterised in that the navigation support points (P) are embodied as permanent magnets.

5. Navigation system according to claim 4, characterised in that the navigation support points (P) are of cylindrical form and their diameter is a maximum of 1 cm.

6. Navigation system according to one or more of the preceding claims, characterised in that the navigation support points (P) are embodied as active and/or passive data carriers of an identification system.

7. Navigation system according to one or more of the preceding claims, characterised in that the navigation support points (P) are mounted in the ground (3) without protruding above the road surface.

8. Navigation system according to one or more of the preceding claims, characterised in that data or coordinates of the set reference path (19) and/or the navigation support points (P) can be entered in the path guiding computer (8) by means of wire-less and/or wire-based data coupling through at least one external computer (20),

9. Navigation system according to one or more of the preceding claims, characterised in that each navigation support point (P) is associated with a safety distance $S_{max.}$ for detection by the interval-detecting sensor system (2) or for triggering an emergency stoppage of the industrial truck (1).

**Revendications**

1. Système de navigation pour le guidage sans fil de chariots de manutention (1) roulant sur le sol, sans conducteur et présentant une configuration de roues choisie pour permettre le libre déplacement en roulage et en courbe le long d'un trajet de consigne (19) présentant au moins un tronçon droit et/ou en courbe, dans lequel sont prevus des marquages installés dans le sol, et sur lesquels passent les chariots de manutention (1) roulant sur le sol, dont la position est mise en mémoire dans un calculateur embarqué (9) et qui sont relies par un emsemble capteur à l'intérieur du véhicule de façon active avec un dispositif de guidage de trajet (8) interne au véhicule pour la correction de parcours des chariots de manutention (1), dans lequel les marquages sont disposés le long de la zone du trajet de consigne (19), à distance les uns des autres et en chaîne linéaire de formation, et dans lequel les distances entre les marquages peuvent être uniformes et/ou non-uniformes, caractérisé en ce que les marquages sont réalises sous la forme de points de support de navigation (P), ponctuels et susceptibles d'être détectés par induction, dont les dimensions longitudinales et les dimensions transversales sont notablement inférieures à la largeur du véhicule, en ce que les distances entre les points de support de navigation (P) sont supérieures à quatre fois l'empattement (22) du vehicule et en ce que l'ensemble capteur (2) réalise la mesure de la distance (d) entre l'axe longitudinal (4) du chariot de manutention (1) et le point de support de navigation (P) concerné.

2. Système de navigation selon la revendication 1, caractérisé en ce que le système capteur interne au véhicule (2) est réalisé sous la forme d'un capteur de trajet a ultrasons fonctionnant sur la base de la magnétostriction.

3. Système de navigation selon la revendication 1 ou 2, caractérisé en ce que la distance entre les points de support de navigation (P) est au minimum de 8m et au maximum de 30m.

4. Système de navigation selon une ou plusieurs des revendications précédentes, caractérisé en ce que les points de support de navigation (P) sont réalisés sous la forme d'aimants permanents.

5. Système de navigation selon la revendication 4, caractérisé en ce que les points de support de navigation (P) sont réalisés cylindrique et leur diamètre maximal atteint 1cm.

6. Système de navigation selon une ou plusieurs des revendications précédentes caractérisé en ce que les points de support de navigation (P) sont réalisés sous la forme de supports de donnée actifs et/ou passifs d'un système d'identification.

7. Système de navigation selon une ou plusieurs des revendications précédentes caractérisé en ce que les points de support de navigation (P) sont noyés dans le sol sans dépasser à la surface du chemin de roulement.

8. Système de navigation selon une ou plusieurs des revendications précédentes caractérisé en ce que les données ou les valeurs des coordonnées du trajet de rapport de consigne (19) et/ou des points de support de navigation (P) sont susceptibles d'être introduites dans le calculateur de commande de trajet (8) au moyen d'un couplage de données à liaison sans et/ou par fil au moyen d'au moins d'un calculateur externe (20).

9. Système de navigation selon une ou plusieurs des revendications précédentes caractérisé en ce qu'a chaque point de support de navigation (P) est associé un intervalle de sécurité S max pour la détection par l'ensemble capteur de mesure de distance (2) ou bien pour le déclenchement d'un arrêt d'urgence du chariot de manutention (1).

Fig. 1

Fig. 4

Fig. 5

Fig. 3

Fig 3

Fig. 2

Fig. 6

Fig. 7